# EUROPÄISCHE PATENTANMELDUNG

(11) **EP 4 799 826 A2**
(43) Veröffentlichungstag der Anmeldung: **02.09.2026**
(21) Anmeldenummer: 26191938.5
(22) Anmeldetag: 07.06.2021
(51) Int. Cl.: B60B 33/06

(54) **ROLLE FÜR VERFAHRBARE GEGENSTÄNDE**

(30) Priorität: 29.06.2020 DE 102020117031
(62) Dokumentnummer(n) der früheren Anmeldung(en) nach Art. 76 EPÜ: 21746327.2 / 4 171 966
(71) Anmelder: Colson Rollen GmbH, 42499 Hückeswagen (DE)
(72) Erfinder: SCHULTE, Arnolf, 42929 Wermelskirchen (DE)
(74) Vertreter: Berkenbrink, Kai-Oliver

(57) **Zusammenfassung**

Die Erfindung betrifft eine Rolle für verfahrbare Gegenstände.

## Beschreibung

Die Erfindung betrifft eine Rolle für verfahrbare Gegenstände, insbesondere Bettenrolle gemäß gattungsbildendem Teil des ersten Patentanspruchs.

Der DE 10 2015 013 415 A1 ist eine Rolle für verfahrbare Gegenstände, insbesondere Bettenrolle, zu entnehmen, zumindest beinhaltend ein Laufrad, eine selbiges aufnehmende Gabel, ein Führungsrohr, das über mindestens ein Lager relativ zur Gabel schwenkbar ausgebildet ist, gabelseitig vorgesehene Verriegelungsmittel sowie ein mit dem Laufrad in Wirkverbindung bringbares, verdrehsicher ausgebildetes Bremssystem, wobei das Bremssystem ein im Wesentlich zylindrisch ausgebildetes, einseitig profiliertes Feststellelement beinhaltet, das zur Bildung der Verdrehsicherung gabelseitig mit einem mehreckigen Sicherungselement in Wirkverbindung bringbar ist.

Ziel des Erfindungsgegenstandes ist es, eine vom Stand der Technik abweichende alternative Verdrehsicherung für Laufrollen unterschiedlichster Bauart bereitzustellen, die gegenüber dem Stand der Technik baulich einfacher ausgebildet ist.

Dieses Ziel wird dadurch erreicht, dass das Bremssystem einen Bremsschuh, eine Bremsspindel, einen Führungszapfen sowie einen Führungstopf beinhaltet, wobei die Bremsspindel nutförmig ausgebildete Führungen aufweist, der Führungstopf mit Ansätzen versehen ist und wobei die Ansätze zur Bildung der Verdrehsicherung mit den Führungen der Bremsspindel in Wirkverbindung bringbar sind.

Vorteilhafte Weiterbildungen des Erfindungsgegenstandes sind den Unteransprüchen zu entnehmen.

Abweichend zum Stand der Technik wird somit eine alternative Verdrehsicherung bereitgestellt, die einfach baut und somit preiswerter hergestellt werden kann.

Der Führungstopf besteht vorzugsweise aus Metall und ist im montierten Zustand fest mit Bauteilen des Lagers verbunden.

Vorteilhafterweise ist der Führungstopf als Stanz-Biegeteil ausgebildet.

Des Weiteren wird vorgeschlagen, dass der Innendurchmesser des Führungstopfes größer als der Innendurchmesser des Lagers ausgebildet ist. Der Führungstopf ist hierbei mit dem Innenring des Lagers fest verbunden, insbesondere vernietet.

Die Bremsspindel soll den Führungszapfen umschließen.

Einem weiteren Gedanken der Erfindung gemäß, sind die einander zugewandten Stirnflächen des Bremsschuhs sowie der Bremsspindel mit einer Verzahnung versehen. Die beiden Verzahnungen greifen im gebremsten Zustand der Laufrolle ineinander.

Die Ansätze des Führungstopfes verbleiben in jeder Stellung der Rolle (gebremst oder ungebremst) in den nutartig ausgebildeten Führungen der Bremsspindel, so dass die Verdrehsicherung in jedem Betriebszustand der Rolle gewährleistet ist.

Darüber hinaus soll der Führungszapfen innerhalb des Führungsrohrs positioniert und über einen im Bereich des Führungsrohrs vorgesehenen Exzenter in axialer Richtung bewegbar sein, um somit unterschiedliche Betriebszustände der Rolle realisieren zu können.

Der Erfindungsgegenstand ist anhand eines Ausführungsbeispiels in der Zeichnung dargestellt und wird wie folgt beschrieben. Es zeigen:
- Figur 1: Prinzipskizze einer als Bettenrolle ausgebildeten Rolle in verschiedenen Ansichten;
- Figur 2: Einzelteildarstellung der Verdrehsicherung der Rolle gemäß Figur 1;
- Figur 3: Darstellung des Bremssystems in verschiedenen Ansichten bzw. Schnitten;
- Figur 4: Alternative Darstellung der Rolle gemäß Figur 1 ;
- Figur 5: Einzelteildarstellung des Bremssystems gemäß Figur 4.

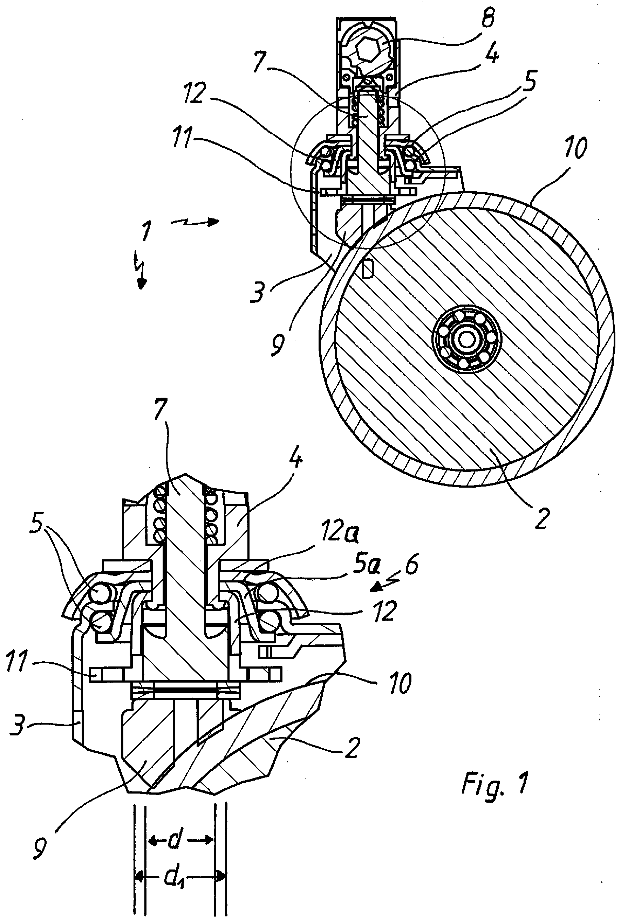

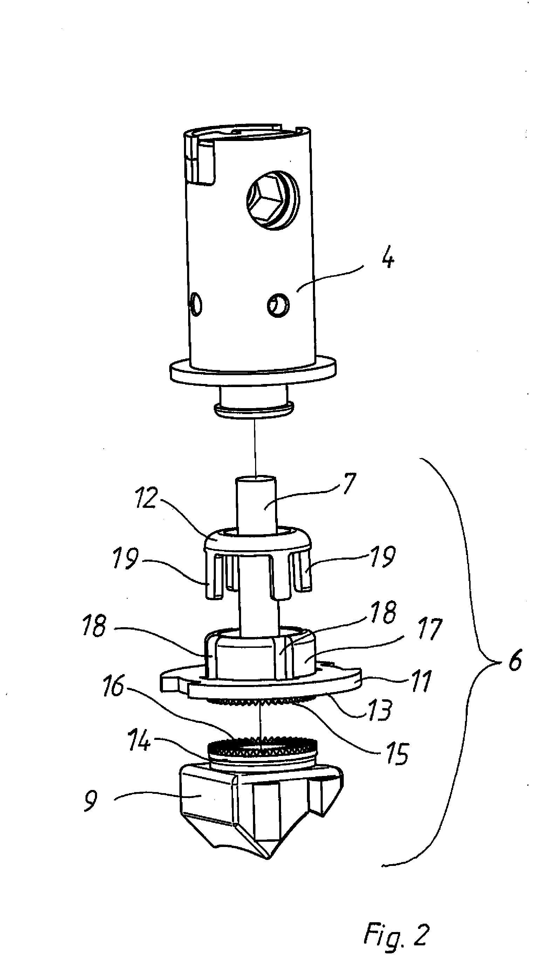

Figur 1 zeigt als Prinzipskizze eine als Bettenrolle ausgebildete Rolle 1 in verschiedenen Ansichten bzw. Schnitten. Die Rolle beinhaltet ein Laufrad 2, eine selbiges aufnehmende Gabel 3, ein Führungsrohr 4, das über mindestens ein Lager 5 mit der Gabel 3 schwenkbar verbunden ist. Gabelseitig befindet sich ein verdrehsicher ausgebildetes Bremssystem 6, das in Figur 2 näher beschrieben wird. In Figur 1 erkennbar ist ein Führungszapfen 7, der im oberen Bereich des Führungsrohrs 4 mit einem Exzenter 8 in Wirkverbindung steht. Ferner erkennbar sind folgende Bauteile: ein Bremsschuh 9, der mit der äußeren Umfangsfläche 10 des Laufrads 2 in Wirkverbindung bringbar ist, eine Bremsspindel 11 sowie ein als Metallteil ausgebildeter Führungstopf 12. Die obere Stirnfläche 12a ist mit dem Innenring 5a des Lagers 5 fest verbunden, insbesondere vernietet, wobei der Innendurchmesser d₁ des Führungstopfes 12 größer ausgebildet ist als der Innendurchmesser d des Lagerinnenringes 5a.

Figur 2 zeigt als Einzelteildarstellung die Bauteile der Verdrehsicherung des Bremssystems 6. Erkennbar ist der Führungszapfen 7, der innerhalb des Führungsrohrs 4 geführt wird. Des Weiteren dargestellt ist der Bremsschuh 9, die Bremsspindel 11 sowie der Führungstopf 12. Die einander zugewandten Stirnflächen 13,14, einerseits der Bremsspindel 11 und andererseits des Bremsschuhs 9 sind mit radialen Verzahnungen 15,16 versehen. Im, dem Führungstopf 12 zugewandten oberen Bereich 17 der Bremsspindel 11 sind nutartig ausgebildete Führungen 18 vorgesehen. Am Führungstopf 12 sind, in Richtung des oberen Bereiches 17 weisende Ansätze 19 angeformt, die zur Bildung der Verdrehsicherung des Bremssystems 6 in die Führungen 18 der Bremsspindel 11 eingreifen. Der Führungstopf 12 ist als zylindrisches Metallteil ausgebildet. Im montierten Zustand greifen die Ansätze 19 des Führungstopfes 12 in jedem Betriebszustand der Rolle 1 in die nutartig ausgebildeten Führungen 18 der Bremsspindel 11 ein.

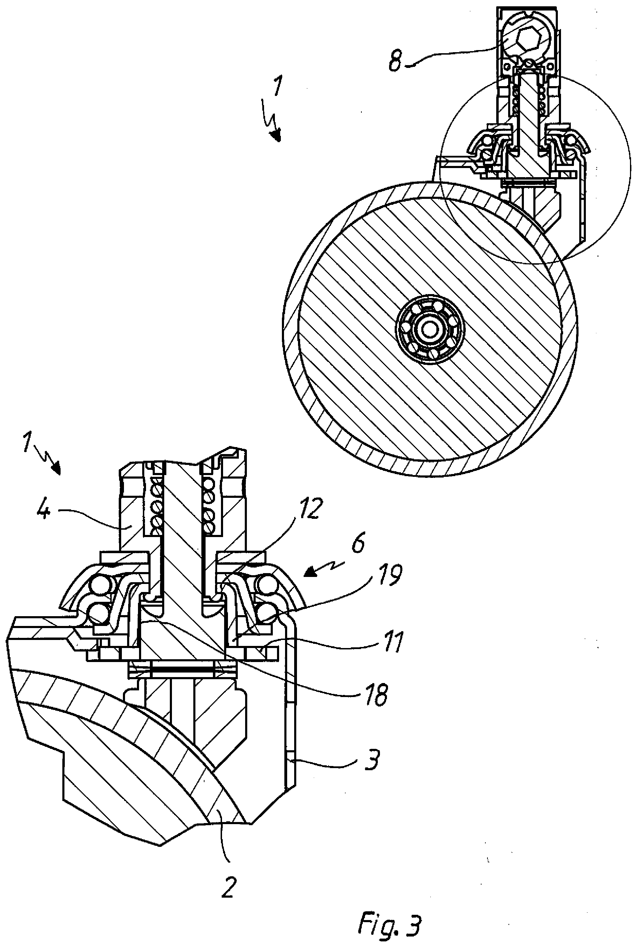

Figur 3 zeigt die Rolle 1 gemäß Figur 1 mit einem in oberster Stellung befindlichen Bremssystem. Die Ansätze 19 des Führungstopfes 12 ruhen hierbei in den Führungen 18 der Bremsspindel 11. Durch Betätigung des Exzenters 8 können Betriebszustände der Rolle 1, wie gebremst, ungebremst oder schwenkbar herbeigeführt werden. In Figur 3 ist der Betriebszustand dargestellt, dass die Gabel 3 und somit das Laufrad 2 gegenüber dem Führungsrohr 4 schwenkbar ist.

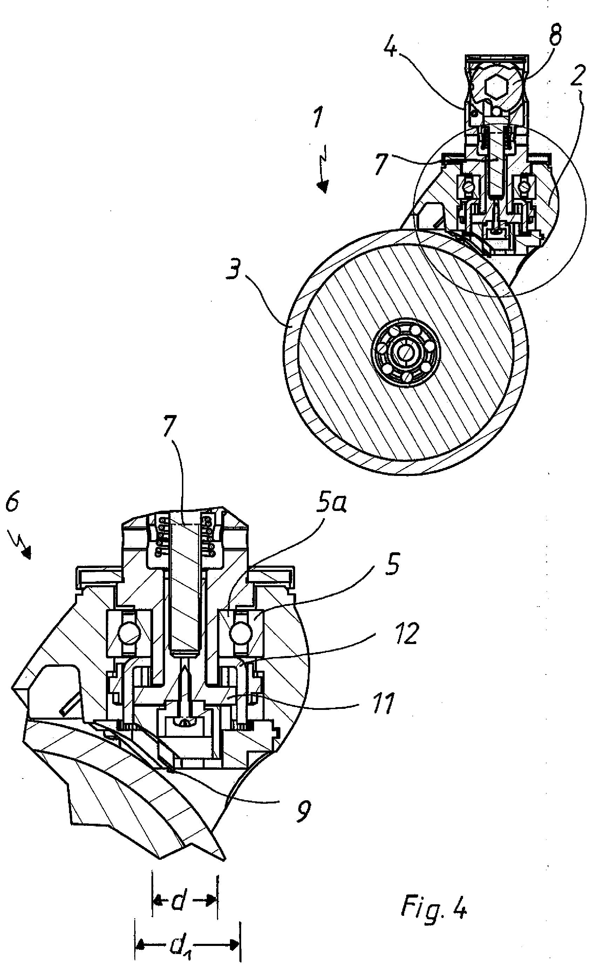

Die Figuren 4 bis 6 zeigen alternative Prinzipskizzen einer als Bettenrolle ausgebildeten Rolle 1 in verschiedenen Ansichten und Schnitten.

Gleiche Bauteile sind mit gleichen Bezugszeichen wie in den Figuren 1 bis 3 bezeichnet. Erkennbar ist die Rolle 1, das Laufrad 2, die Gabel 3, das Führungsrohr 4 sowie ein andersartig ausgebildetes Lager 5. Ferner erkennbar ist das Bremssystem 6, der Führungszapfen 7, der Exzenter 8, der Bremsschuh 9, die Bremsspindel 11, der Führungstopf 12. In Analogie zu Figur 1 ist auch hier der Innendurchmesser d₁ des Führungstopfes 12 größer ausgebildet als der Innendurchmesser d des Lagerinnenrings 5a des Lagers 5.

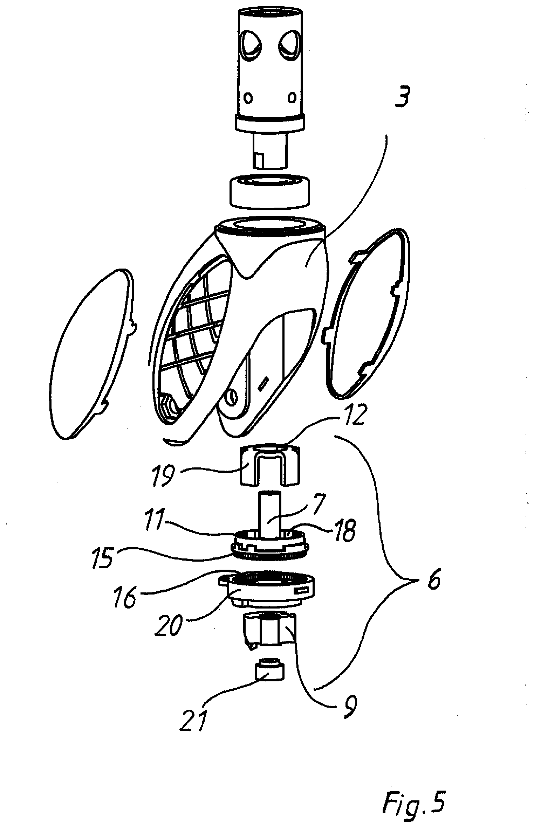

Figur 5 zeigt als Einzelteildarstellung den konstruktiven Aufbau der Rolle 1. Das Bremssystem 6 ist, in Analogie zu Figur 2, dargestellt. Erkennbar sind folgende Bauteile: der Führungstopf 12, die am Führungstopf 12 angeformten Ansätze 19, der Führungszapfen 7, die Bremsspindel 11 samt der nutartig ausgebildeten Führungen 18 sowie die Gabel 3.

Ferner erkennbar ist der Bremsschuh 9, ein Bremsschuhhalter 20 sowie ein Hebetopf 21. Der Bremsschuh 9 ist im montierten Zustand der Rolle drehfest innerhalb des Bremsschuhhalters 20 positioniert, während der Hebetopf 21 mit dem Führungszapfen 7 zusammenwirkt. Bei Änderungen des Betriebszustandes der

Rolle, respektive des Bremssystems 6, betätigt der Hebetopf 21 den Bremsschuh 9. Die Bremsspindel 11 ist mit einer in axialer Richtung umlaufenden Verzahnung 15 versehen. Gleiches gilt für den Bremsschuhhalter 20, wobei die Verzahnung mit dem Bezugszeichen 16 ersehen ist. Im Betriebszustand greifen die Verzahnungen 15,16 ineinander, wobei die Verzahnung 15 in axialer Richtung relativ zur Verzahnung 16 bewegbar ist.

### Bezugszeichenliste

- 1: Rolle
- 2: Laufrad
- 3: Gabel
- 4: Führungsrohr
- 5: Lager
- 5a: Lagerinnenring
- 6: Bremssystem
- 7: Führungszapfen
- 8: Exzenter
- 9: Bremsschuh
- 10: Umfangsfläche
- 11: Bremsspindel
- 12: Führungstopf
- 12a: Stirnfläche Führungstopf
- 13: Stirnfläche
- 14: Stirnfläche
- 15: Verzahnung
- 16: Verzahnung
- 17: oberer Bereich Bremsspindel
- 18: Führung Bremsspindel
- 19: Ansätze
- 20: Bremsschuhhalter
- 21: Hebetopf
- d: Durchmesser Lagerinnenring
- d₁: Durchmesser Führungstopf

## Patentansprüche

1. Rolle für verfahrbare Gegenstände, insbesondere Bettenrolle (1), zumindest beinhaltend ein Laufrad (2), eine selbiges aufnehmende Gabel (3), ein Führungsrohr (4), das über mindestens ein Lager (5) relativ zur Gabel (3) schwenkbar ausgebildet ist, gabelseitig vorgesehene Verriegelungsmittel sowie ein mit dem Laufrad (2) in Wirkverbindung bringbares, verdrehsicher ausgebildetes Bremssystem (6), **dadurch gekennzeichnet, dass** das Bremssystem (6) einen Bremsschuh (9), eine Bremsspindel (11), einen Führungszapfen (7) sowie einen Führungstopf (12) beinhaltet, wobei die Bremsspindel (11) nutförmig ausgebildete Führungen (18) aufweist, der Führungstopf (12) mit Ansätzen (19) versehen ist und wobei die Ansätze (19) zur Bildung der Verdrehsicherung mit den Führungen (18) der Bremsspindel (11 ) in Wirkverbindung bringbar sind.

2. Rolle nach Anspruch 1, **dadurch gekennzeichnet, dass** der Führungstopf (12) aus Metall besteht und im montierten Zustand fest mit Bauteilen des Lagers (5) verbunden, insbesondere vernietet, ist.

3. Rolle nach Anspruch 1 oder 2, **dadurch gekennzeichnet, dass** der Führungstopf (12) als Stanz-Biegeteil ausgebildet ist.

4. Rolle nach einem der Ansprüche 1 bis 3, **dadurch gekennzeichnet, dass** der Innendurchmesser (d₁) des Führungstopfes (12) größer als der Innendurchmesser (d) des Lagers (5) ausgebildet ist.

5. Rolle nach einem der Ansprüche 1 bis 4, **dadurch gekennzeichnet, dass** der Führungstopf (12) mit dem Innenring (5a) des Lagers (5) fest verbunden, insbesondere vernietet, ist.

6. Rolle nach einem der Ansprüche 1 bis 5, **dadurch gekennzeichnet, dass** die Bremsspindel (11) den Führungszapfen (7) umschließt.

7. Rolle nach einem der Ansprüche 1 bis 6, **dadurch gekennzeichnet, dass** die einander zugewandten Stirnflächen (13,14) einerseits des Bremsschuhs (9) und andererseits der Bremsspindel (11) mit einer Verzahnung (15,16) versehen sind.

8. Rolle nach einem der Ansprüche 1 bis 7, **dadurch gekennzeichnet, dass** der Führungszapfen (7) innerhalb des Führungsrohrs (4) positioniert und über einen im Bereich des Führungsrohrs (4) vorgesehenen Exzenter (8) in axialer Richtung bewegbar ist.
